# DEMANDE DE BREVET EUROPEEN

(11) **EP 1 450 248 A1**
(43) Date de publication de la demande: **25.08.2004**
(21) Numéro de dépôt: 04290436.7
(22) Date de dépôt: 18.02.2004
(51) Int. Cl.: G06F 3/033, G06F 3/023

(54) **Dispositif d'interface homme machine sécurisé pour écran tactile**

(30) Priorité: 18.02.2003 FR 0301946
(71) Demandeur: GIAT INDUSTRIES, 78000 Versailles (FR)
(72) Inventeur: Montels, Jean-Marc, 82370 Orgueil (FR)
(74) Mandataire: Célanie, Christian

(57) **Abrégé**

L'invention concerne un dispositif d'interface homme machine sécurisé comprenant une dalle tactile, un écran de visualisation, la dalle tactile étant transparente et superposée à l'écran de visualisation, un organe virtuel de commande 6 comprenant au moins une représentation graphique 6' sur l'écran de visualisation et une première zone active 6" délimitant une partie de la surface de la dalle tactile en regard de ladite représentation graphique 6', une unité de contrôle et de commande interfacée avec la dalle tactile 1 et avec l'écran de visualisation déterminant les coordonnées X et Y d'appui de l'opérateur 3 sur la dalle tactile, contrôlant la représentation graphique 6' de l'organe virtuel de commande 6 sur l'écran de visualisation et contrôlant la première zone active 6" de l'organe virtuel 6 sur la dalle tactile, caractérisé en ce que l'organe virtuel de commande 6 est initialement disposé en position verrouillée, l'appui dans la première zone active 6" étant inopérant.

## Description

Le secteur technique de la présente invention est le domaine des interfaces hommes machines sécurisée comprenant une dalle tactile et un écran. La présente invention est applicable à toute commande nécessitant une sécurisation du processus de commande telle que requise dans les domaines de l'appareillage médical, du transport ferroviaire ou aérien, de la conduite d'installations industrielles à risques, des systèmes d'armes, etc.

Il est connu à ce jour différentes technologies de dalle tactile. Toutes sont généralement associées avec un écran de visualisation en superposition et par transparence afin de fournir à l'opérateur un retour visuel d'information de ses actions. Dans le cas de réalisation de pupitres ou claviers virtuels à base de dalle tactile, cette technologie permet des commandes simples directement exécutables et il n'existe pas de moyen connu de sécuriser une action de l'utilisateur.

Il est connu dans le domaine des interfaces homme machine, des composants électromécaniques, qui permettent par des dispositifs généralement mécaniques de sécuriser les organes de commandes en interdisant la commande par une action unique de l'opérateur. Ces dispositifs se présentent, par exemple, sous forme de capots de protection pour des boutons poussoirs (mono stables à rappel par ressort) ou interdit de relevage pour des interrupteurs à bascule bi- ou multi-positions stables. Ces dispositifs sont essentiellement réutilisables. On peut aussi citer les dispositifs de type plombage, où l'organe de commande est verrouillé par un dispositif (plombage ou fil ou goupille maintenu par un plombage) que l'opérateur doit rompre avant de pouvoir actionner la commande, qui ne permettent qu'un usage protecteur unique. Ces dispositifs additionnels aux organes de commandes assurent que l'opérateur ne peut pas directement actionner la commande critique, mais plutôt, qu'il doit au préalable valider un mode opératoire précis, qui lui autorise l'action ultérieure. Ceci permet de garantir que l'opérateur a délibérément, selon un mode opératoire précis, dans un premier temps préparé son action, puis dans la phase finale décidé (ou non) de poursuivre en déclenchant sa commande. Ainsi, ces dispositifs protecteurs (capot de protection, interdit de relevage ou plombage) empêchent une action, par maladresse, non désirée (l'opérateur heurte l'organe de commande) ou une erreur de manipulation (l'opérateur se trompe d'organe de commande). La procédure à suivre, comprenant plusieurs opérations selon une séquence impérative, garantit que l'opérateur agit consciemment, volontairement et réfléchit à son opération. Il doit débuter son opération en dégageant au préalable le dispositif interdisant l'accès à l'organe de commande. Cet état (organe de commande déverrouillé) est clairement visible et attire l'attention de l'opérateur. Le fait même que l'organe de commande soit protégé, traitement réservé aux commandes critiques, incite l'opérateur à une vigilance supérieure. Il peut ensuite à sa convenance, ou en fonction de l'évolution de la situation, soit poursuivre en actionnant effectivement l'organe de commande, si tel est toujours son intention, soit revenir sur sa décision en repositionnant le dispositif (capot de protection ou interdit de relevage) dans sa position initiale où ce dernier interdit l'actionnement de la commande. Ceci n'est pas possible dans le cas de plombage où la rupture est définitive. Il est cependant possible de ne pas actionner une commande déplombée.

L'inconvénient majeur des dispositifs à base de dalle tactile tels qu'existants est de ne pas permettre de sécuriser certaines commandes critiques.

Les inconvénients des dispositifs électromécaniques sécurisés (capot de protection ou interdit de relevage) sont multiples et l'on citera les principaux. Ces dispositifs nécessitent généralement des composants coûteux, un câblage coûteux sur les pupitres. Plusieurs dispositifs sont généralement nécessaires sur un même pupitre. Ils nécessitent une légende gravée ou sérigraphiée, qui pose des problèmes lors d'une utilisation multilingue. L'évolution des fonctions du produit est malaisée. La visibilité en nocturne est un problème supplémentaire. Ces dispositifs posent en outre des problèmes de très fort encombrement des surfaces et des volumes des pupitres de commande interface homme machine.

La présente invention remédie à ces différents inconvénients. Le dispositif objet de la présente invention traite plus particulièrement de la sécurisation des commandes de l'opérateur dans le cas de commandes critiques et/ou potentiellement dangereuses. Le dispositif objet de la présente invention permet de fournir à l'opérateur un ou des organes de commande sécurisés, lorsqu'une dalle tactile est utilisée pour réaliser un pupitre virtuel. Ces organes de commandes virtuels sécurisés présentent les mêmes avantages que les dispositifs mécaniques de protection (capot de protection, interdit de relevage, plombage...).

L'invention a donc pour objet un dispositif d'interface homme machine sécurisé comprenant une dalle tactile, un écran de visualisation, la dalle tactile étant transparente et superposée à l'écran de visualisation, un organe virtuel de commande comprenant au moins une représentation graphique sur l'écran de visualisation et une première zone active délimitant une partie de la surface de la dalle tactile en regard de ladite représentation graphique, une unité de contrôle et de commande interfacée avec la dalle tactile et avec l'écran de visualisation déterminant les coordonnées X et Y d'appui de l'opérateur sur la dalle tactile, contrôlant la représentation graphique de l'organe virtuel de commande sur l'écran de visualisation et contrôlant la première zone active de l'organe virtuel sur la dalle tactile, caractérisé en ce que l'organe virtuel de commande est initialement disposé en position verrouillée, l'appui dans la première zone active étant inopérant.

Selon une première réalisation, l'organe virtuel de commande est déverrouillable par un tracé de l'opérateur sur la dalle tactile d'au moins une courbe possédant au moins une propriété géométrique en relation avec la première zone active.

Selon une autre réalisation, dans l'état intermédiaire/déverrouillé, la commande associée à l'organe virtuel de commande est déclenchée par un appui simple de l'opérateur dans la première zone active associée à cet organe de commande virtuel.

Selon encore une autre réalisation, dans l'état intermédiaire/déverrouillé, l'organe virtuel de commande revient automatiquement à l'état initial/verrouillé après un temps déterminé, en l'absence d'action de l'opérateur.

Le tracé de courbe peut comprendre deux segments.

Le point caractéristique peut être l'intersection des deux segments.

Selon encore une autre réalisation, chacun desdits segments est déterminé par le point de début et le point de fin d'appui par l'opérateur sur la dalle tactile.

Avantageusement, la propriété géométrique réside dans le fait qu'un point caractéristique du tracé est localisé dans la première zone active.

Avantageusement, dans l'état initial/sécurisé/verrouillé, une représentation graphique d'un protecteur virtuel est superposée à la représentation graphique de l'organe virtuel de commande.

Avantageusement encore, dans l'état intermédiaire/déverrouillé une représentation graphique d'un protecteur virtuel est non superposée à la représentation graphique de l'organe virtuel de commande.

Avantageusement encore, dans l'état intermédiaire/déverrouillé, l'appui par l'opérateur, dans une seconde zone active de la dalle tactile correspondant à la représentation graphique du protecteur virtuel provoque le retour de l'organe virtuel de commande à l'état initial/verrouillé.

Avantageusement encore, dans l'état déverrouillé, l'attention de l'opérateur est attirée par un supplément d'effets visuels et ou sonores.

Selon une autre réalisation, chacun des états initial/sécurisé, intermédiaire/déverrouillé et final/activé de l'organe virtuel de commande est représenté par une représentation graphique particulière.

Selon encore une réalisation, la représentation graphique de l'organe virtuel de commande utilise une métaphore de feu tricolore avec chacun des trois états initial/sécurisé, intermédiaire/déverrouillé et final/activé respectivement représenté par l'état VERT, Orange ou Rouge.

L'invention concerne également l'utilisation du dispositif d'interface homme machine sécurisé défini précédemment à la réalisation d'un pupitre virtuel, à la réalisation d'un bouton poussoir virtuel, à la réalisation d'un interrupteur multi-positions virtuel et à la réalisation de la commande d'une fonction feu.

On voit que selon l'invention le dispositif comprend une dalle tactile couplée avec un écran de visualisation, un organe virtuel de commande, une unité de contrôle et de commande. Sur l'écran de visualisation est dessinée, sous le contrôle de l'unité de contrôle et de commande, une représentation graphique de l'organe virtuel de commande. Sur la surface de la dalle tactile une première zone active est délimitée sous le contrôle de l'unité de contrôle et de commande. Elle couvre sur la dalle tactile la surface de la représentation graphique de l'organe virtuel de commande visible par transparence au travers de la dalle tactile. L'opérateur interagit par appui/contact avec la dalle tactile. L'opérateur peut appuyer en tout point de la surface de la dalle tactile. L'unité de contrôle et de commande de la dalle tactile détermine pour chaque contact de l'opérateur sur la dalle tactile, les coordonnées (par exemple cartésiennes) X et Y de la position de contact. L'organe virtuel de commande est initialement sécurisé, un appui simple dans ladite première zone active est inopérant : il ne déclenche pas la commande associée à l'organe virtuel de commande comme ce serait le cas dans un système classique comprenant un dalle tactile.

Le premier point est le point de début d'appui sur la dalle tactile. Le second point est le point de fin d'appui sur la dalle tactile. Chacun des deux segments AB (respectivement CD) est réalisé par l'opérateur en glissant son doigt depuis le point d'appui sur la dalle tactile A (respectivement C) jusqu'au point de relâchement/éloignement de la dalle tactile B (respectivement D).

La propriété géométrique est par exemple la localisation du point caractéristique à l'intérieur de la première zone active. Le déverrouillage est effectif lorsque cette figure est centrée sur la première zone active de l'organe virtuel de commande. Ceci est réalisé, dans l'exemple des deux segments, si l'intersection de ces deux segments se situe dans la première zone active de l'organe virtuel de commande.

Un protecteur virtuel est représenté graphiquement en conjonction avec l'organe virtuel de commande. Dans l'état initial/verrouillé, ce protecteur virtuel est représenté en utilisant une symbologie signifiant fermé et superposé avec la représentation graphique de l'organe virtuel de commande.

Dans l'état intermédiaire/déverrouillé, ce protecteur virtuel est représenté en utilisant une symbologie signifiant ouvert et ne se superposant pas avec la représentation graphique de l'organe virtuel de commande.

Dans la phase intermédiaire, l'opérateur peut provoquer le retour à l'état initial par un appui dans une seconde zone active correspondant au protecteur virtuel.

La vigilance de l'opérateur est renforcée, dans la phase intermédiaire, en attirant son attention par des signaux sonores. La vigilance de l'opérateur est également renforcée, dans la phase intermédiaire, en attirant son attention par des signaux visuels surimposés au changement de graphisme représentatif de l'organe virtuel de commande. Les signaux visuels surimposés peuvent être, par exemple, des changements de couleur ou d'intensité périodiques.

D'autres caractéristiques, détails et avantages de l'invention ressortiront plus clairement de la description détaillée donnée ci-après à titre indicatif en relation avec des dessins sur lesquels :
- la figure 1 présente une vue d'ensemble du dispositif objet de la présente invention,
- les figures 2, 3 et 4 illustrent la séquence de déverrouillage d'un organe virtuel de commande de type poussoir,
- les figures 5 et 6 illustrent les représentations graphiques utilisables pour un organe virtuel de commande de type interrupteur trois position, muni d'un protecteur de type interdit de relevage.

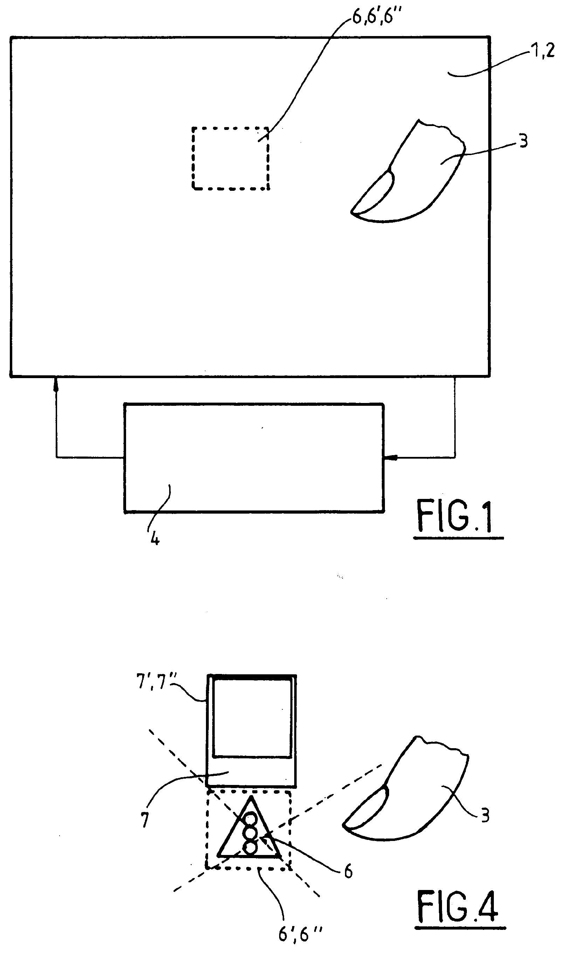

Le dispositif objet de la présente invention, comme le montre la figure 1, comprend les composants principaux suivants : une dalle tactile 1 montée au-dessus d'un écran de visualisation 2 visible par transparence au travers de la dalle tactile 1. Un opérateur 3 agit en percevant visuellement les informations présentées sur l'écran de visualisation 2 et en effectuant des appuis/contacts, généralement avec son doigt, sur la surface active de la dalle tactile 1. Une unité de contrôle commande 4 interface d'une part la dalle tactile 1 et détermine en cas d'appui sur la dalle tactile 1, les coordonnées X et Y du point d'appui, et d'autre part l'écran de visualisation 2 sur lequel elle affiche les informations visuelles. Pour chaque organe virtuel 5, il existe au moins une représentation graphique 5' sur l'écran de visualisation 2. Il est défini sur la dalle tactile 1, pour chaque objet virtuel 5, une zone active 5", superposée en regard de la représentation graphique 5'. Ainsi, si l'organe virtuel de commande 6 est représenté sur l'écran de visualisation 1 par une représentation graphique 6', il lui est associé une première zone active 6" sur la dalle tactile 1 correspondant à la partie de la surface de la dalle tactile 1 se superposant avec la surface de ladite représentation graphique 6' ou plus généralement une première zone active 6" contenant la surface de ladite représentation. Il est nécessaire de définir au moins une zone active par action possible de l'opérateur 3. Dans la phase intermédiaire on distingue une première zone active 6" associée à la représentation graphique 6' de l'organe virtuel de commande 6 proprement dit et une seconde zone active 7" associée à la représentation graphique 7' du protecteur virtuel 7. Ces deux zones 6" et 7" sont disjointes.

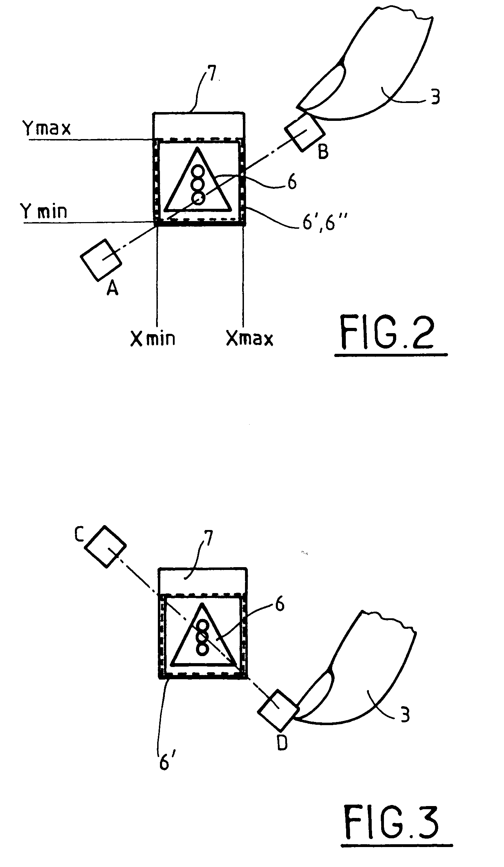

Le fonctionnement détaillé du dispositif est exposé en s'appuyant sur les figures 2,3 et 4, dans le cas particulier d'un bouton poussoir virtuel 6 muni d'un capot de protection virtuel 7, et dans le cas particulier d'un déverrouillage par tracé d'une courbe, cette courbe étant de manière illustrative une croix réalisée par intersection de deux segments AB et CD tracés par l'opérateur 3. La première zone active 6" est dans cet exemple un rectangle déterminé par ses coordonnées extrêmes Xₘᵢₙ, Xₘₐₓ, Yₘᵢₙ et Y_{max.}

La figure 2 présente un poussoir virtuel 6 représenté 6' dans son état initial sécurisé, ici schématisé par un feu tricolore représenté en position Vert. Le capot virtuel 7 est représenté 7' superposé visuellement avec le poussoir virtuel 6. La première zone active du poussoir virtuel 6" est représentée en pointillés. Elle est matérialisée par le rectangle surfacique couvrant le dessin 6' du poussoir virtuel 6.

Afin de faire passer le poussoir virtuel 6 dans l'état intermédiaire déverrouillé, l'unité de commande et de contrôle 4 attend de l'opérateur 3 qu'il effectue une certaine opération. Cette opération est dans le présent exemple le tracé d'une croix, réalisée par deux segments AB et CD. La condition de propriété géométrique supplémentaire de validité est que l'intersection des deux segments AB et CD se situe dans la première zone active 6" du poussoir virtuel 6. L'unité de contrôle et de commande 4 détecte le point A de début d'appui de l'opérateur 3 sur la dalle tactile 1, et relève ses coordonnées (X_{A}, Y_{A}). L'opérateur 3 fait glisser son doigt en maintenant le contact avec la dalle tactile 1. L'unité de contrôle et de commande 4 détecte le point B de fin d'appui ou de relâchement de l'opérateur 3 sur la dalle tactile 1 et relève ses coordonnées (X_{B}, Y_{B}).

L'opération est ensuite répétée pour un nouveau point d'appui C de coordonnées (X_{C} Y_{C}) suivi d'un point de relâchement D de coordonnées (X_{D}, Y_{D}) tel qu'illustré sur la figure 3. On remarque que ni l'ordre de détermination, ni la position des points A, B, C, D, ni la courbe effectivement suivie par l'opérateur 4 entre A et B ou entre C et D n'ont d'influence sur le résultat final, seuls les coordonnées de ces points importent, en ce qu'ils déterminent deux segments AB et CD.

L'unité de contrôle et de commande 4 détermine les équations des deux segments AB et CD.

La droite AB a une équation paramétrique de la forme y = A₁.*x*+*B*₁, à laquelle satisfont les coordonnées des points A et B, ce qui permet de déterminer les paramètres A₁ et B₁, en résolvant le système d'équations suivant :

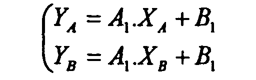

La droite CD a une équation paramétrique de la forme **y = A**_{**2**}***x* + *B***_{**2**}**,** à laquelle satisfont les coordonnées des points C et D, ce qui permet de déterminer les paramètres A₂ et B₂.

Le point d'intersection des deux segments AB et CD de coordonnées (X_{X}, Y_{Y}) est déterminé par résolution du système d'équation suivant : 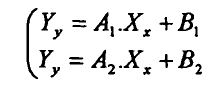 que l'on résout par toute méthode classique, par exemple en inversant la matrice :

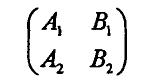

L'unité de contrôle et de commande 4 détermine ensuite si le point de coordonnées (X_{X}, Y_{Y}) d'intersection des deux segments AB et CD se situe dans la première zone active 6" en vérifiant si les deux conditions : 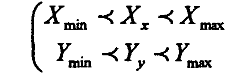 sont réalisées. Dans ce cas le point d'intersection appartient à la première zone active 6" et la commande peut être déverrouillée et le capot virtuel 7 peut être soulevé.

La représentation graphique 6',7' est modifiée, par l'unité de contrôle et de commande 4 pour indiquer le passage à l'état intermédiaire. Le poussoir virtuel 6 est représenté 6' dans l'état intermédiaire, soit par exemple sous forme d'un feu tricolore à l'état Orange. Le capot virtuel 7 est représenté 7' relevé, dégageant le poussoir virtuel 6. D'autres effets visuels tels que clignotement du fond d'écran ou de la représentation de l'organe virtuel de commande 6 ou sonores peuvent être ajoutés pour attirer l'attention de l'opérateur 3 et l'inciter à la vigilance que requiert la criticité de la commande dans cette phase intermédiaire.

Une seconde zone active 7" correspondant à la surface du capot virtuel 7 est créée pour détecter un éventuel appui de l'opérateur 3 dans la zone de l'écran tactile 1 correspondant à la surface en regard de la surface de la représentation graphique 7' de ce capot virtuel 7. Dans le cas d'un déverrouillage irréversible, de type plombage, cette option n'existe pas.

Si l'opérateur 3 appuie dans la première zone active 6" correspondant au poussoir virtuel 6, la commande est effectivement déclenchée. La représentation graphique 6' du poussoir virtuel 6 est remplacée par un feu tricolore en position Rouge.

Si l'opérateur 3 appuie sur la surface de la dalle tactile 1 dans la seconde zone active 7" correspondant au capot virtuel 7, la commande est annulée. Les représentations graphiques 6',7' du poussoir virtuel 6 et du capot virtuel 7 reviennent à l'état initial : feu tricolore en position Vert et capot virtuel 7 représenté 7' rabattu recouvrant la représentation graphique 6' du poussoir virtuel 6.

Dans le cas d'un déverrouillage irréversible, de type plombage, cette option n'existe pas.

En l'absence d'action de l'opérateur 3 dans la phase intermédiaire, pendant une durée T prédéfinie, l'unité de contrôle et de commande 4 peut, si elle est ainsi configurée, revenir automatiquement à l'état initial sécurisé.

Dans le cas d'un déverrouillage irréversible, de type plombage, cette option n'existe pas.

Le dispositif décrit ci-dessus dans le cas d'un poussoir virtuel 6 muni d'un capot de protection virtuel 7 est totalement transposable à un interrupteur multi positions 6 muni d'un interdit de relevage 7 ou encore à d'un dispositif irréversible de type plombage 7.

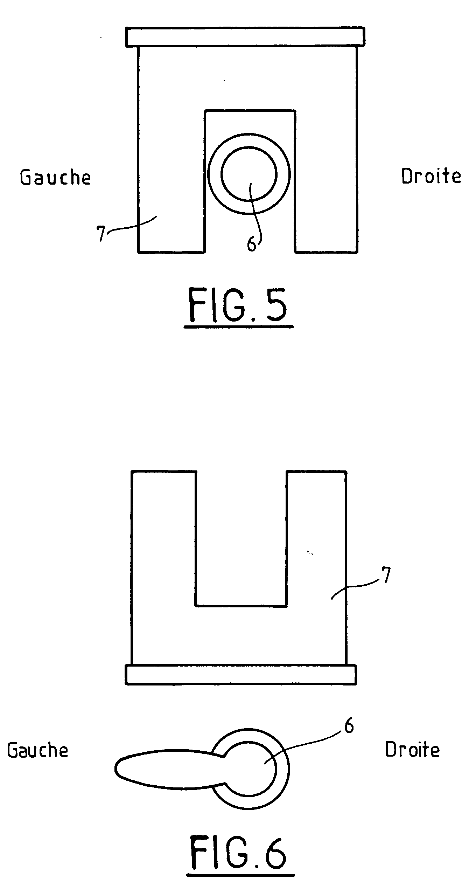

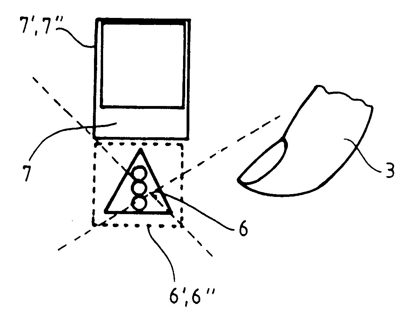

Les figures 5 et 6 représentent un exemple d'un tel interrupteur virtuel 6 à trois positions. La position centrale est la position initiale. Le graphique correspondant est représenté à la figure 5. Un interdit de relevagé virtuel 7 amovible sécurise les deux actions possibles : vers la gauche ou vers la droite. Cet interdit de relevage est représenté fermé/verrouillé sur la figure 5 et déverrouillé dans la figure 6. La figure 6 représente l'état déverrouillé et l'interrupteur 6 actionné vers la gauche.

Un autre exemple d'application de la présente invention à un cas pratique de commande sécurisée est donné pour la fonction feu. Une telle fonction est potentiellement dangereuse et doit être sécurisée. La commande de mise de feu est par exemple réalisée par un organe virtuel de commande 6 de type bouton poussoir. A l'état initial/sécurisé, cet organe est représenté par une première représentation graphique 6',7'. Cette représentation apparaît par exemple sous la forme d'un dessin d'un bouton poussoir 6 dessiné 6' sur l'écran de visualisation. Ce dessin peut par exemple reproduire la symbologie d'une telle commande de mise de feu habituellement utilisée lors de réalisation d'un poussoir électromécanique, afin de ne pas perturber les habitudes d'un opérateur. Il est aussi possible d'ajouter des éléments de graphisme ou de couleur spécifique de l'état initial, par exemple une couleur verte. Un protecteur 7 dont la représentation graphique 7' peut reprendre la symbologie du capot protecteur mécanique est représenté en position capot fermé, soit superposé avec la représentation graphique 6' du poussoir 6. L'appui simple sur la première zone active 6" correspondante à ce bouton poussoir 6, ne déclenche pas la commande de mise de feu, à l'instar d'une autre commande non sécurisée, où le simple appui déclenche l'exécution de la commande. La commande est ainsi sécurisée. Pour effectuer une commande de mise de feu, l'opérateur doit au préalable, déverrouiller l'organe virtuel de commande 6 en effectuant un tracé particulier. Dans le cas illustratif de l'exemple précédent, il doit effectuer un tracé de deux segments, ces deux segments possédants une propriété géométrique particulière, par exemple d'être sécants avec un point d'intersection situé à l'intérieur de la première zone active 6". Ceci entraîne le passage de l'organe virtuel de commande 6 de la mise de feu dans un état intermédiaire. Cet état se caractérise par une éventuelle modification de la représentation graphique 6' du poussoir 6, par exemple un changement de couleur pour l'orange et/ou la modification du dessin de sa représentation graphique. De plus la représentation graphique 7' est modifiée pour représenter l'ouverture d'un capot de protection. Le capot de protection est alors représentée ouvert à côté du poussoir 6. Dans cet état intermédiaire, l'organe virtuel de commande 6 est déverrouillé est la mise de feu peut être obtenue par un simple appui de l'opérateur dans la première zone active 6". Ceci peut être dangereux, et la vigilance de l'opérateur est soutenue en attirant son attention. Ceci peut se faire par un signal sonore. Ceci peut aussi se faire par un signal visuel supplémentaire tel que clignotement de la représentation 6' de l'organe virtuel de commande 6, du protecteur 7', du fond de l'écran de visualisation 2 ou de tout autre élément de représentation graphique. Dans cet état intermédiaire, l'évolution de l'état de l'organe virtuel de commande 6 peut évoluer selon trois possibilités :
- L'opérateur peut maintenir son intention et vouloir déclencher la mise de feu. Dans ce cas il appuie sur la première zone active 6" de l'organe virtuel de commande 6. L'organe virtuel de commande 6 passe alors dans l'état activé. La représentation graphique 6' de l'organe de commande 6 peut alors être modifiée pour indiquer la prise en compte de l'action de l'opérateur et le déclenchement de la commande de mise de feu. Ceci peut par exemple être une modification de la représentation graphique 6' ou de sa couleur.
- L'opérateur peut se raviser et décider de ne pas déclencher la mise de feu. Il est alors préférable de remettre l'organe virtuel de commande 6 dans l'état sécurisé initial. Dans ce cas L'opérateur peut effectuer un appui simple sur la seconde zone active 7" du protecteur virtuel 7. Ceci entraîne le retour à l'état initial de l'organe virtuel de commande.
- L'opérateur peut ne rien décider et attendre. Il est cependant toujours préférable de remettre l'organe virtuel de commande 6 dans l'état sécurisé initial. Pour cela, l'unité de contrôle et de commande 4, peut être configurée pour réaliser ce retour automatique à l'état initial, à l'issue d'un certain temps écoulé après le déverrouillage.

Les représentations graphiques des organes virtuels de commande 6 et des protecteurs virtuels 7 sont données à titre indicatif et peuvent évoluer en fonction des besoins tant fonctionnels qu'esthétiques des pupitres virtuels.

## Revendications

1. Dispositif d'interface homme machine sécurisé comprenant une dalle tactile (1), un écran de visualisation (2), la dalle tactile (1) étant transparente et superposée à l'écran de visualisation (2), un organe virtuel de commande (6) comprenant au moins une représentation graphique (6') sur l'écran de visualisation (2) et une première zone active (6") délimitant une partie de la surface de la dalle tactile (1) en regard de ladite représentation graphique (6'), une unité de contrôle et de commande (4) interfacée avec la dalle tactile (1) et avec l'écran de visualisation (2) déterminant les coordonnées X et Y d'appui de l'opérateur (3) sur la dalle tactile (1), contrôlant la représentation graphique (6') de l'organe virtuel de commande (6) sur l'écran de visualisation (2) et contrôlant la première zone active (6") de l'organe virtuel (6) sur la dalle tactile (1), **caractérisé en ce que** l'organe virtuel de commande (6) est initialement disposé en position verrouillée, l'appui dans la première zone active (6") étant inopérant.

2. Dispositif d'interface homme machine sécurisé selon la revendication 1, **caractérisé en ce que** l'organe virtuel de commande (6) est déverrouillable par un tracé de l'opérateur (3) sur la dalle tactile (1) d'au moins une courbe possédant au moins une propriété géométrique en relation avec la première zone active (6").

3. Dispositif d'interface homme machine sécurisé selon la revendication 1 ou 2, **caractérisé en ce que** dans l'état intermédiaire/déverrouillé, la commande associée à l'organe virtuel de commande (6) est déclenchée par un appui simple de l'opérateur (3) dans la première zone active (6") associée à cet organe de commande virtuel.

4. Dispositif d'interface homme machine sécurisé selon la revendication 1 ou 2, **caractérisé en ce que** dans l'état intermédiaire/déverrouillé, l'organe virtuel de commande (6) revient automatiquement à l'état initial/verrouillé après un temps déterminé, en l'absence d'action de l'opérateur (3).

5. Dispositif d'interface homme machine sécurisé selon l'une quelconque des revendications 1 à 4, **caractérisé en ce que** le tracé de courbe comprend deux segments.

6. Dispositif d'interface homme machine sécurisé selon l'une quelconque des revendications 1 à 5, **caractérisé** en ce le point caractéristique est l'intersection des deux segments, chacun desdits segments est déterminé par le point de début et le point de fin d'appui par l'opérateur (3) sur la dalle tactile (1).

7. Dispositif d'interface homme machine sécurisé selon l'une quelconque des revendications 2 à 6, **caractérisé en ce que** la propriété géométrique est qu'un point caractéristique du tracé est localisé dans la première zone active (6").

8. Dispositif d'interface homme machine sécurisé selon l'une quelconque des revendications 1 à 7, **caractérisé en ce que** dans l'état initial/sécurisé/verrouillé, une représentation graphique (7') d'un protecteur virtuel (7) est superposée à la représentation graphique (6') de l'organe virtuel de commande (6).

9. Dispositif d'interface homme machine sécurisé selon l'une quelconque des revendications 1 à 7, **caractérisé en ce que** dans l'état intermédiaire/déverrouillé une représentation graphique (7') d'un protecteur virtuel (7) est non superposée à la représentation graphique (6') de l'organe virtuel de commande (6).

10. Dispositif d'interface homme machine sécurisé selon la revendication 8, **caractérisé en ce que** dans l'état intermédiaire/déverrouillé, l'appui par l'opérateur (3), dans une seconde zone active (7") de la dalle tactile (1) correspondant à la représentation graphique (7') du protecteur virtuel (7) provoque le retour de l'organe virtuel de commande (6) à l'état initial/verrouillé.

11. Dispositif d'interface homme machine sécurisé selon l'une quelconque des revendications précédentes, **caractérisé en ce que** dans l'état déverrouillé, l'attention de l'opérateur (3) est attirée par un supplément d'effets visuels et ou sonores.

12. Dispositif d'interface homme machine sécurisé selon l'une quelconque des revendications précédentes, **caractérisé en ce que** chacun des états initial/sécurisé, intermédiaire/déverrouillé et final/activé de l'organe virtuel de commande (6) est représenté par une représentation graphique (6', 7') particulière.

13. Dispositif d'interface homme machine sécurisé selon l'une quelconque des revendications précédentes, **caractérisé en ce que** la représentation graphique (6') de l'organe virtuel de commande (6) utilise une métaphore de feu tricolore avec chacun des trois états initial/sécurisé, intermédiaire/déverrouillé et final/activé respectivement représenté par l'état VERT, Orange ou Rouge.

14. Utilisation du dispositif d'interface homme machine sécurisé selon l'une quelconque des revendications précédentes à la réalisation d'un pupitre virtuel, ou à la réalisation d'un bouton poussoir virtuel, ou à la réalisation d'un interrupteur multi-positions virtuel, ou à la réalisation de la commande d'une fonction feu.
